# EUROPEAN PATENT APPLICATION

(11) **EP 2 620 615 A2**
(43) Date of publication of application: **31.07.2013**
(21) Application number: 13152399.5
(22) Date of filing: 23.01.2013
(51) Int. Cl.: F02C 3/20, F23R 3/40

(54) **Naphtha and process gas/syngas mixture firing method for gas turbine engines**

(30) Priority: 25.01.2012 US 201213357638
(71) Applicant: General Electric Company, Schenectady, New York 12345 (US)
(72) Inventor: Shanmugam, Venkadesh, 560066 Bangalore, Karnataka (IN); Rozdolski, Michael John, Schenectady, NY New York 12303 (US); Sathyakumar, Karthik Kothur, 560066 Bangalore, Karnataka (IN); Vaddepalli, Anil Kumar, 506003 Hyderabad (IN); Nenmeni, Vijay R., Atlanta, GA Georgia 30339 (US)
(74) Representative: Cleary, Fidelma

(57) **Abstract**

A fuel delivery system (60) for a gas turbine designed to efficiently transfer from one type of fuel to a separate fuel, comprising different and cooperating fuel modules, namely high hydrogen fuel gas (61), distillate fuel and naphtha fuel modules, each of which feeds a different liquid (82,83) or gas fuel (71) to the combustors (73), an atomized air delivery system (88) for either the naphtha (83) or distillate (82) (or combinations thereof), an air extraction system (80), a plurality of distribution control valves for the high hydrogen fuel gas, distillate fuel and naphtha fuel modules, and a nitrogen purge system (93) to purge the high hydrogen fuel gas (71) lines to the combustors (73) and/or flushing the naphtha lines (83) with distillate (82).

## Description

The present invention relates to gas turbine engine fuel systems and, more particularly, to a fuel delivery system and method for providing a controlled mixture of different types of fuels, one of which nominally includes naphtha or a liquid distillate and another which includes a process gas (or syngas) containing a high volume percentage of free hydrogen, to the combustors of a gas turbine engine in order to improve the fuel flexibility and efficiency of the engine. Other aspects of the invention relate to the efficient transfer from one fuel type to another in order to increase the overall fuel flexibility of the engine.

### BACKGROUND OF THE INVENTION

Modem gas turbine engines require precise monitoring and control of the fuel system, particularly the components of the fuel mixture being fed to the combustors, in order to achieve desired levels of performance and efficiency of the engine over long periods of time. In the past, the operation of gas turbines using a combination of a high energy fuel (such as natural gas) with a lower energy fuel (e.g., syngas) often resulted in significant operational problems due to the incompatibility of different fuel sources, particularly when the fuel originates in countries where the fuel varies in composition, for example with a high sulfur content or lower heating value.

The design and operation of any dual gas fuel system is also complicated by the different chemical, thermal and fluid transfer characteristics of candidate fuels when combined into a single fuel. For example, operating a gas turbine engine with a low energy fuel requires a significantly higher volumetric flow rate than a turbine relying solely on a high energy fuel. In addition, a low energy fuel, which might be derived from an upstream gasification process, must often be supplied to the gas turbine engine at higher than normal temperatures, e.g., up to or exceeding 500°F (260°C), and thus require hardware that can accommodate and control large variations in both fuel temperature and volumetric flow rate. The operation of combustors using mixtures of different types of fuels is also compounded when the average molecular weight and thermal characteristics of the resulting fuel mixture changes over time.

Some industrial gas turbines are capable of alternatively running on liquid and gaseous fuels, including natural gas, and thus may include fuel supply systems relying on both liquid and gas fuels. However, such known gas turbine engines do not bum both gas and liquid fuels at the same time. Rather, when the turbine relies on liquid fuel, the gas fuel supply (such as high hydrogen gas or natural gas) is likely to be turned off or severely restricted. Similarly, when the combustors bum a gaseous fuel alone, any liquid fuel supply is normally discontinued. Although fuel transfers may occur during the operation of a gas turbine where the fuel supply is switched from liquid to gas, the transfer back and forth between fuel types poses significant operational and fuel control problems that have been difficult to resolve.

Gas turbine engines that alternatively bum both liquid and gaseous fuel also normally require a liquid fuel purge system to clear the fuel nozzles in the combustors of liquid fuel and/or related fuel transfer lines. For example, when the liquid fuel system is turned off, a purge system operates to flush out any remaining liquid fuel from the nozzles of the combustor, normally using a cooling airflow to the nozzles. The inefficiencies inherent in such purge operations reduce engine efficiency, particularly if the primary fuel supply changes in form or potential heat value.

A significant need therefore still exists for an effective "dual gas" turbine fuel system that accommodates and controls the delivery and use of a mixture of a high energy fuel, a low energy fuel, or a variable mix of high and low energy fuels in a much more efficient manner. A need also exists for methods and systems that can provide different fuels (both liquids and gases) on a continuous, but reliable, basis as part of a smooth transition from one fuel source to another without causing significant delays or operational changes during the transition.

### BRIEF DESCRIPTION OF THE INVENTION

As detailed below, and in connection with the associated figures, the present invention includes a new type of fuel delivery system for a gas turbine that makes possible the use and transfer from one form of fuel to a different fuel efficiently and easily without adversely affecting the overall performance of the gas turbine engine. In exemplary embodiments, the invention comprises a fuel gas module that includes a high volume percentage of free hydrogen (hereafter identified as "high hydrogen fuel gas"). The invention also comprises means for delivering the gas fuel to one or more combustors of the gas turbine, a distillate fuel module that provides a first liquid fuel to the combustors, a naphtha fuel module that delivers a second liquid fuel (e.g., naphtha) to the combustors, an atomized air delivery system coupled to the combustors for atomizing either the naphtha or distillate fuel (or combinations thereof), an air extraction system coupled to the discharge of the combustors, and a plurality of distribution control valves for each of the high hydrogen fuel gas, distillate fuel and naphtha fuel modules.

In order to effectively transfer from one fuel source to another, the invention also contemplates using a separate nitrogen purge module to first purge the existing high hydrogen fuel gas or liquid fuel feed lines to the combustors, with distribution control vales that shift to the new candidate fuel. In exemplary embodiments, the high hydrogen fuel gas contains at least 5% by volume hydrogen up to a maximum of pure hydrogen.

As detailed below, the present invention also includes a related method for efficiently changing the composition of the fuel fed to the combustors of a gas turbine from a gas fuel to a liquid fuel by feeding a controlled amount of a high hydrogen fuel gas to the combustors, shutting down the flow of the hydrogen gas using a plurality of distribution control valves, purging the lines carrying the high hydrogen fuel gas with nitrogen, feeding a controlled amount of a liquid fuel to the same combustors and feeding pressurized air from an atomizing air module to the combustors to atomize said liquid fuel.

### BRIEF DESCRIPTION OF THE DRAWINGS

Embodiments of the present invention will now be described, by way of example only, with reference to the accompanying drawings in which:
FIG. 1 is a simplified schematic flow diagram of an exemplary gas turbine engine system that relies on liquid and gas fuel systems used in the alternative as a singular feed to the gas turbine engine;
FIG. 2 is a simplified flow diagram of a gas turbine engine with an existing prior art fuel system, but without benefit of the present invention;
FIG. 3 is a simplified process flow diagram depicting the major pieces of process equipment, piping configuration and control systems for an exemplary naphtha, distillate and high hydrogen fuel gas for a fuel system according to the invention;
FIGS. 4A through 4D are a series of related process flow diagrams for a first aspect of the present invention illustrating the steps taken in sequence to convert the fuel being fed to the combustors from a distillate to a combined distillate and high hydrogen gas dual feed or to a 100% hydrogen fuel gas feed;
FIGS. 5A through 5C depict a series of process flow diagrams for a second aspect of the present invention illustrating a second sequence of steps taken to convert the fuel being fed to the combustors from a high hydrogen fuel gas feed to a combined high hydrogen fuel gas and naphtha dual feed;
FIGS. 6A through 6E are a series of process flow diagrams for a third aspect of the present invention illustrating the sequence of steps taken to convert the fuel being fed to the combustors from a naphtha feed to a combination high hydrogen fuel gas and distillate dual feed; and
FIGS. 7A through 7C are a series of process flow diagrams for a fourth aspect of the present invention illustrating the sequence of steps taken to purge the process flow lines using nitrogen and depicting the steps taken to flush the naphtha lines using distillate after the system has been tripped from a high hydrogen fuel gas and naphtha dual fuel feed.

### DETAILED DESCRIPTION OF THE INVENTION

As noted above, the present invention relates to a new method for transferring from one fuel source used as the primary fuel source for a gas turbine engine to a different fuel source in a more efficient and controlled manner, taking into account the composition and thermal characteristics of different candidate fuels. The fuel transfers described herein will vary, depending on the exact composition and availability of fuel available to power the gas turbine engine (including naphtha, various distillates, high hydrogen fuel gas and even pure hydrogen). In the end, the transfers from one fuel source to another significantly increase the fuel operating flexibility of the entire gas turbine engine.

The invention nominally uses one or more fuels, namely naphtha (a volatile liquid), various distillates (also liquids) or process fuel gas containing a relatively high percentage of free hydrogen, i.e., greater than 5% by volume. The naphtha, distillates and/or high hydrogen fuel gas are combined in a pre-determined formula based, in major part, on the combustion dynamics of the engine at a particular point in time. In exemplary embodiments, the naphtha and distillate are combined according to a pre-determined mixing envelope readying the mixture for firing. Alternatively, high hydrogen fuel gas can be used in place of one or more of the liquid fuel feeds.

The present invention also contemplates using a wide variety of different liquid and gas fuels, depending on their composition and thermal characteristics and the specific demands of the gas turbine engine. In the exemplary embodiments described herein, free nitrogen is normally used as a buffer between the high hydrogen fuel gas and naphtha (or distillate) in order to ensure a smooth and controlled transition from one fuel source to another, and possibly back again. Following the nitrogen purge, the new fuel feed is monitored and controlled during firing using nozzle pressure ratio limits which provide for a predetermined and controlled final fuel composition being fed to the combustors.

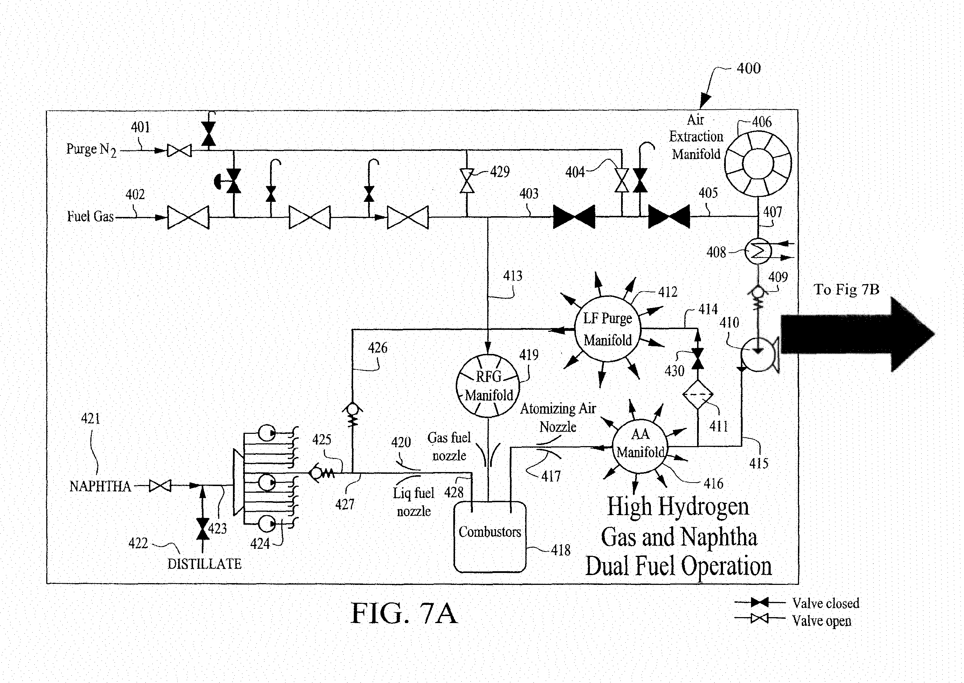

The invention thus can be used to easily convert gas turbines running with only liquid fuel (particularly naphtha-only engines) to high hydrogen fuel gas or even a mixture of two types of fuel. The reliability of the engine can also be improved by co-firing the mixture of naphtha and high hydrogen fuel gas constituents. When one of the two fuels is not available, the engine can be automatically transferred to another candidate fuel. Because of its inherent volatility, the naphtha component normally must be purged with a distillate, such as high speed diesel fuel or an equivalent distillate, after the naphtha feed has been discontinued. See, e.g., the discussion below relating to FIGS. 7A-7C.

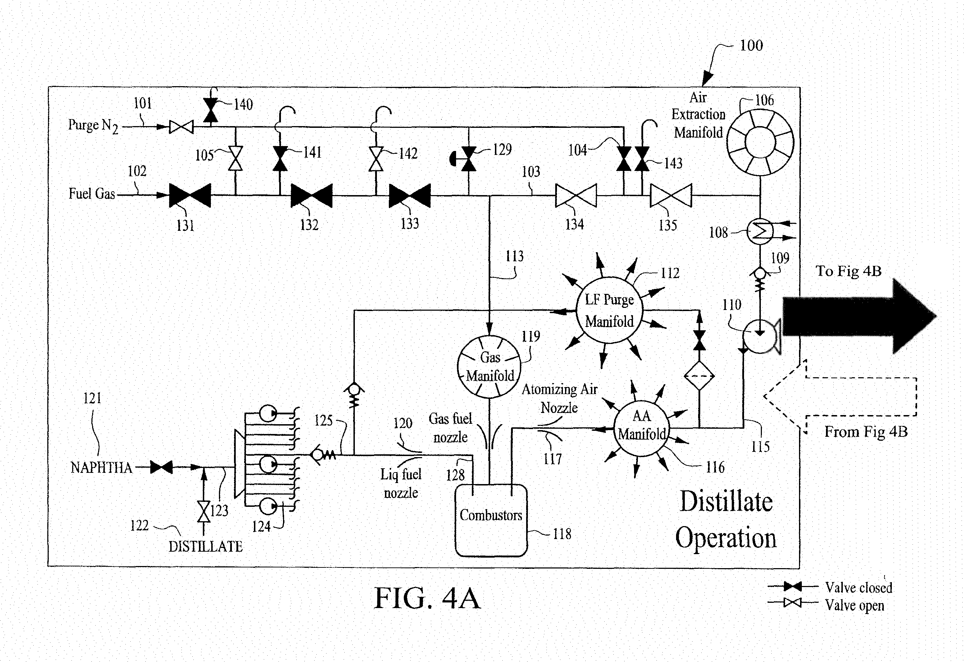

The invention thus provides an effective "dual gas" turbine fuel system using a mixture of a high energy fuel, a low energy fuel, or a variable mix of high and low energy fuels. As such, the method and system allows for the use of a wide spectrum of different fuel sources, including primarily naphtha, hydrogen or various distillates, on a continuous basis with a smooth transition from one fuel source to another without significant operational changes being necessary upstream of the combustors. By way of summary (and as illustrated in the associated figures), the invention contemplates transferring from a distillate only feed to either a high hydrogen fuel gas only or to a high hydrogen fuel gas and distillate mixture or to a high hydrogen fuel gas and naphtha mixture (and vice versa); from a naphtha only feed to either high hydrogen fuel gas only or to a high hydrogen fuel gas and distillate mixture or a high hydrogen fuel gas and naphtha mixture (and vice versa). See FIGS. 4A through 6E.

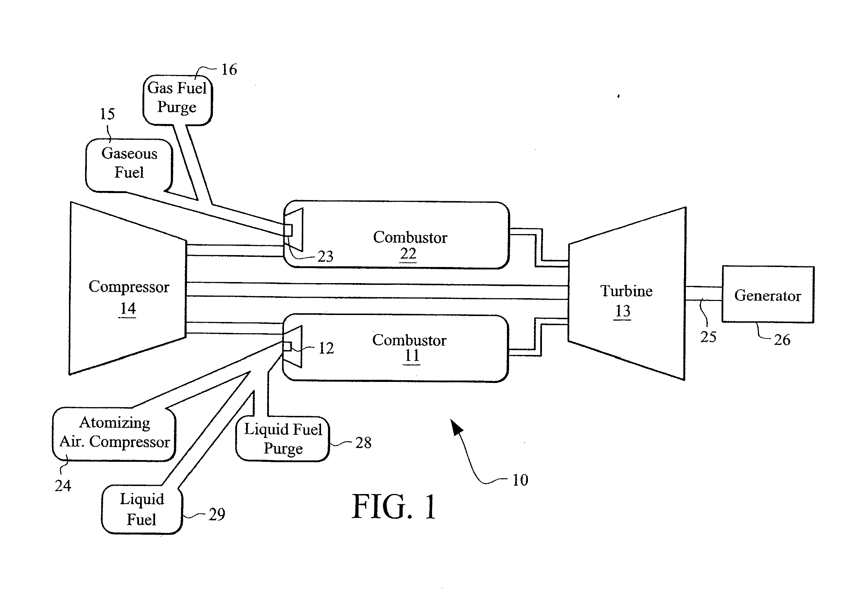

Turning to the figures, FIG. 1 is a simplified schematic flow diagram of an exemplary prior art gas turbine engine system that combines liquid and gas fuel systems used alternatively, but separately. FIG. 1 depicts a gas turbine engine 10 having liquid fuel feed 29, atomizing air compressor 24 and a liquid fuel purge 28. Nominally, the gas turbine is designed to run on gas or liquid fuel, such as natural gas or syngas, and thus includes gaseous fuel system 15, gas fuel purge system 16 and liquid fuel system 29. Other major components of the gas turbine include main compressor 14, combustors 11 and 22 and gas turbine 13. The power output of the gas turbine includes a rotating turbine shaft 25 which may be coupled to a generator 26 to produce electric power.

In the exemplary industrial gas turbine shown in FIG. 1, the combustors also typically comprise a plurality of combustor "cans," each of which has a liquid fuel nozzle 12 and a gas fuel nozzle 23 (a single combustor may have one or more gas or liquid fuel nozzle depending on the design). The combustion is initiated within the combustion cans at points slightly downstream of the nozzles. Air from compressor 14 flows around and through the combustion cans to provide oxygen for combustion.

Air for the liquid fuel system purge can also be provided by compressor 14. When the gas turbine operates on liquid fuel alone, atomized air from atomizing air compressor 24 is blown into the liquid fuel feed 29 through liquid fuel nozzles 12 in order to provide a flow of continuous air to the nozzles. Liquid fuel purge 28 can be used when the system transfers from liquid to gas fuel. In like manner, gas fuel purge 16 injects air into the gas fuel system 15 to purge any residual gas fuel and cool gas fuel nozzles 23 if the system changes to liquid fuel.

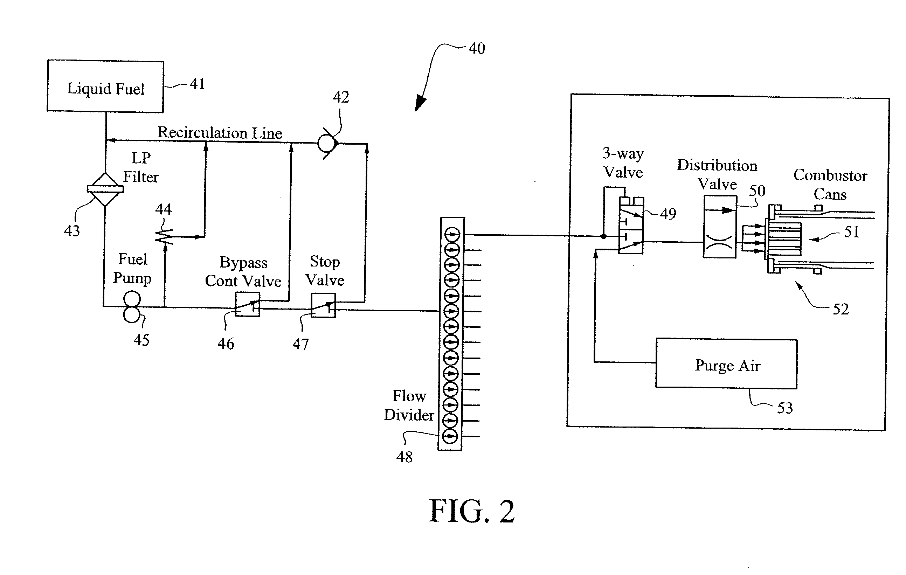

FIG. 2 is a simplified flow diagram of a gas turbine engine that includes an existing prior art fuel system, but without benefit of the present invention. Liquid fuel is provided to liquid fuel system 40 from liquid fuel source 41. The flow path for liquid fuel system 40 includes a flow divider 48, with the flow passing through a low-pressure ("LP") filter 43, fuel pump 45, bypass control valve 46 and stop valve 47. Pressure relief valve 44, bypass control valve 46 and stop valve 47 cooperate to recirculate liquid fuel flowing through the recirculation line to the upstream side of low-pressure filter 43. Check valve 42 in the recirculation line prevents back flow in the recirculation line. Flow divider 48 divides the liquid fuel flow into a plurality of liquid fuel flow paths leading to combustor cans 52. Each liquid fuel flow path downstream of the flow divider nominally includes a 3-way valve 49 and a distribution valve 50 before entering combustor cans 52.

Three-way valve 49 permits flow to the combustor nozzles 51 from the liquid fuel flow path or from a liquid fuel purge 53. In like manner, three-way valve 49 is designed to selectively allow flow to the combustor nozzles from the liquid fuel while preventing backflow of fuel to the liquid fuel purge air system or allow purge air to individual combustor nozzles 51. Three-way valve 49 prevents any backflow of purge air into the liquid fuel system upstream of the valve. When gas fuel is supplied to the turbine, 3-way valve 49 is positioned to block liquid fuel flow and allow purge air to pass for purposes of cooling the fuel nozzles in the combustor. The purge must be shut off when any liquid fuel is turned on.

As noted above, the flow diagram depicted in FIG. 2 suffers from a lack of flexibility in the amount and composition of the gas or liquid fuels that can be used. Such systems may also require modifications or even engine downtime to efficiently shift from one fuel source to another and may not readily accommodate changes in gas or liquid fuel compositions.

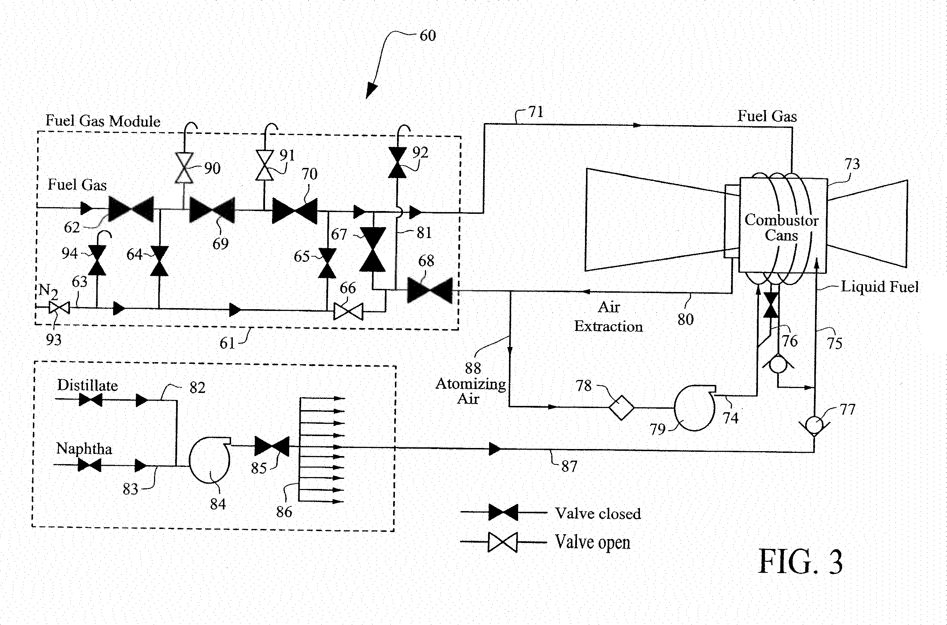

FIG. 3 is a simplified process flow diagram depicting the major pieces of equipment, process configuration and control systems for an exemplary naphtha, distillate and high hydrogen fuel gas mixture for a first fuel system 60 according to the invention. As in all figures, FIG. 3 depicts "closed" flow lines with the valves shown in a solid form. "Open" lines are depicted with the valves having a non-solid, open form. Under normal operating conditions, high hydrogen fuel gas module 61 feeds high hydrogen fuel gas directly to one or more combustors 73 ("cans") in the gas turbine engine, with the flow of fuel passing through shutoff valve 62, stop valve 69 and control valve 70 into the combustors through main high hydrogen fuel gas feed line 71 as shown.

FIG. 3 also includes high hydrogen fuel gas vent lines 90 and 91 and purge vent valve 92. When the system changes from high hydrogen fuel gas to a combined distillate/naphtha feed as described above, valves 62, 69 and 70 remain closed. The feed lines to the combustor are initially purged with nitrogen through nitrogen feed line 63, nitrogen purge isolation valve 93 and nitrogen shutoff valves 64, 65, 66 and 67 prior to introduction of the distillate/naphtha fuel following a nitrogen purge.

In order to operate the system using a combined distillate/naphtha feed to the combustors following a purge with nitrogen through the gas fuel system, liquid distillate 82 or liquid naphtha 83 are fed to centrifugal pump 84, which increases the pressure of the combined fuel feed through liquid fuel control valve 85 and naphtha/distillate flow divider 86, which in turn provides controlled amounts of the distillate/naphtha being fed as combustor liquid fuel feed 87 through check valve 77 into one or more combustor cans 73. Simultaneous with the liquid fuel feed 75 to the combustor cans, atomizing air ("AA") 88 is fed to the combustors by first passing the air through heat exchanger 78 and thereafter through atomizing air compressor 79 which increases the air pressure in compressor discharge line 74 to provide a constant stream to atomize liquid fuel feed 75 as it enters the combustors.

If the system needs to be returned to a relatively pure, e.g., 100%, high hydrogen fuel gas feed, atomizing air feed 76 can be used to purge the liquid fuel nozzle through a liquid fuel purge manifold by passing pressurized air through the combustor cans, with the air stream following purge being discharged through air extraction line 80. Again, as noted above, the entire fuel system can be shifted from one fuel source to another quickly and efficiently without shutting down the gas turbine engine.

FIGS. 4A through 4D are a series of related process flow diagrams for a first aspect of the present invention illustrating the specific process steps taken in sequence to convert the fuel being fed to the combustors from a distillate to a combined distillate and high hydrogen fuel gas feed. In FIG. 4A, the large arrows connecting adjacent process flow diagrams illustrate the different process steps implemented in sequence in order to transfer from a pure liquid distillate operation with an intermediate nitrogen purge stage and thereafter to a combined distillate/high hydrogen fuel gas feed, and finally to a 100% high hydrogen fuel gas operation without any distillate being present in the feed to the combustors. For purposes of clarity and ease of reference in illustrating the transition from one stage to another, the same principal pieces of process equipment and fluid flow lines are depicted in each stage but with different valves being opened or closed to reflect the transition taking place.

In the starting phase of operation, labeled "Distillate Operation" in FIG. 4A and identified generally as distillate phase 100, naphtha feed 121 and distillate feed 122 are combined at feed juncture 123 and pass through an array of flow dividers 124. An individual feed mixture 125 is then fed through liquid fuel nozzle 120 into combustors 118 through combustor fuel line 128. Simultaneously, air is fed through atomizing air ("AA") manifold 116 and AA nozzle 117 into one or more combustors 118. The air originates from the air extraction manifold 106 from a compressor discharge casing and passes through heat exchanger 108, check valve 109 and air compressor 110 which provides higher pressure air flow 115. The pressurized air then passes through AA manifold 116 (or alternatively through liquid fuel ("LF") purge manifold 112 during a purge operation) into one or more of the combustors 118.

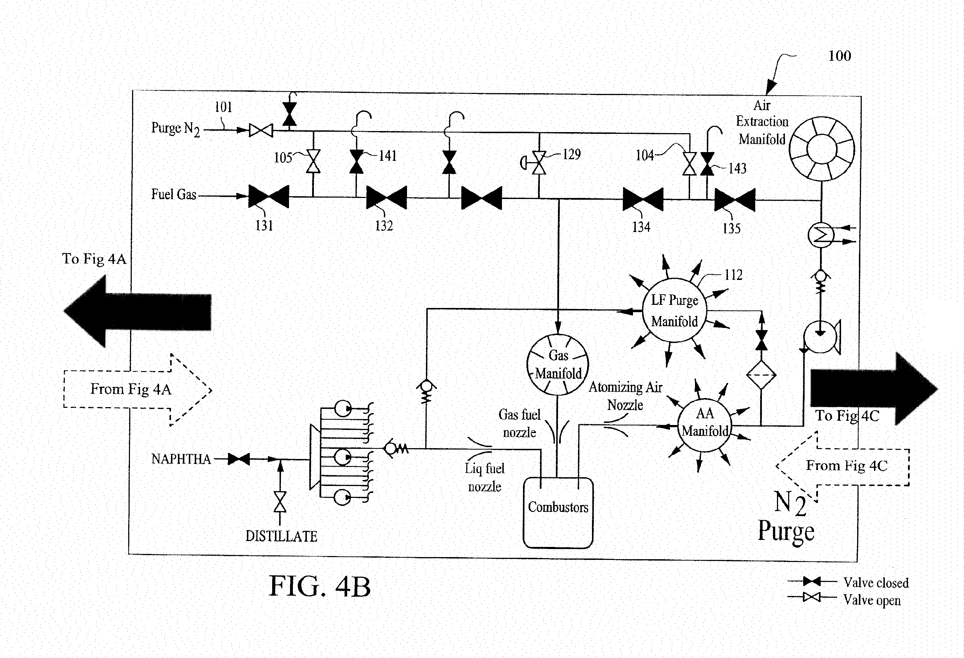

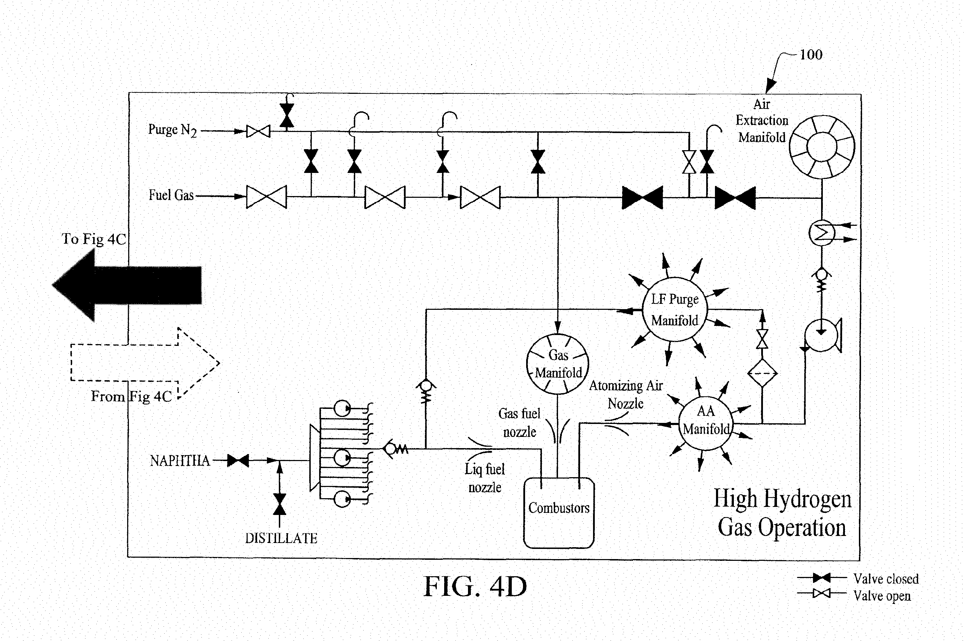

FIG. 4A also illustrates the potentially "dormant" portion of the process flow configuration during a purely distillate fuel operation, namely the alternative flow configuration for use with a high hydrogen fuel gas 102 alone, including the nitrogen purge system described above in connection with FIG. 3 (using nitrogen purge feed line 101). During a distillate operation as described above, the high hydrogen fuel gas feed is shut down (with closed valves as shown) in comparison to FIG. 4D in which the high hydrogen fuel gas 102 passes through a series of gate and control valves into and through main high hydrogen fuel gas feed line 113 into high hydrogen fuel gas manifold 119, which in turn feeds prescribed amounts of high hydrogen fuel gas to one or more combustors 118 during a high hydrogen fuel gas mode of operation. FIG. 4A also illustrates the general flow pattern and valves used to control the nitrogen purge, i.e., using valves 105, 104 and control valve 129 which normally would be closed until a purge is initiated (see FIG. 4B).

FIG. 4B depicts the exemplary piping configuration for achieving an intermediate nitrogen purge of the main process lines during a transition from distillate feed to, for example, a relatively high (e.g., 100%) high hydrogen fuel gas operation. Nitrogen purge 101 is introduced through the same piping as the high hydrogen fuel gas feed, including valves 105, 104 and 129. The purge occurs in three different flow areas: (i) a controlled nitrogen purge through valve 105 which purges the area between gas valves 131 and 132 and then vents through vent valve 141; (ii) a nitrogen purge through valve 104 which purges the area between gas purge valves 134 and 135 and then vents through vent valve 143; and (iii) a nitrogen purge through control valve 129 purging gas manifold 119 which feeds into the combustor.

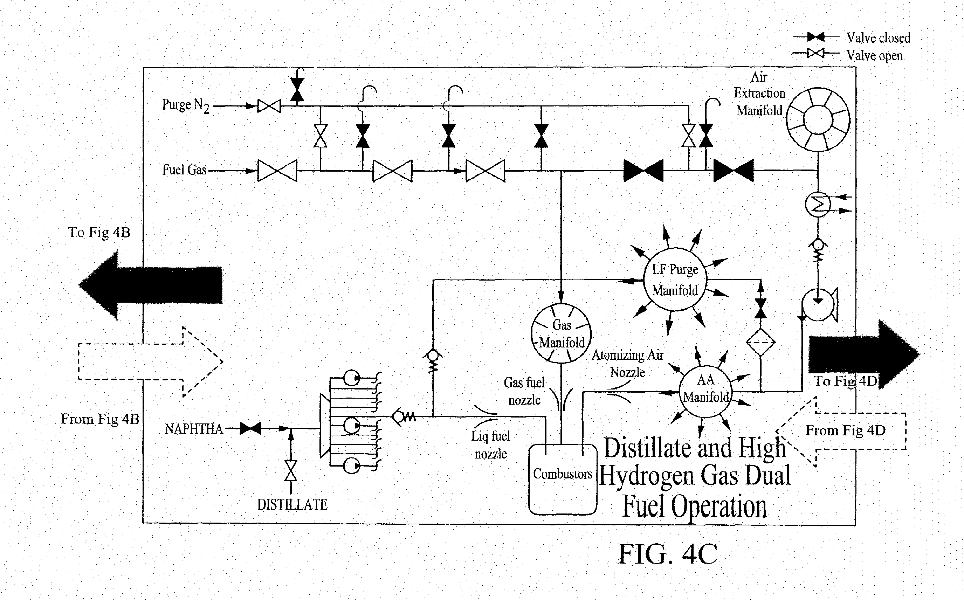

Related FIGS. 4C and 4D depict the continued stages of operation according to the invention as the system continues to transition following the nitrogen purge step from a "Distillate and High Hydrogen Gas Dual Fuel Operation" (FIG. 4C) to a "High Hydrogen Fuel Gas Operation" (FIG. 4D), with the same basic valve and piping configuration. However, for each different stage, the valve positions and piping necessary to achieve each successive mode are depicted with the valves shown either open or closed, depending on the mode, as each of the successive figures illustrate.

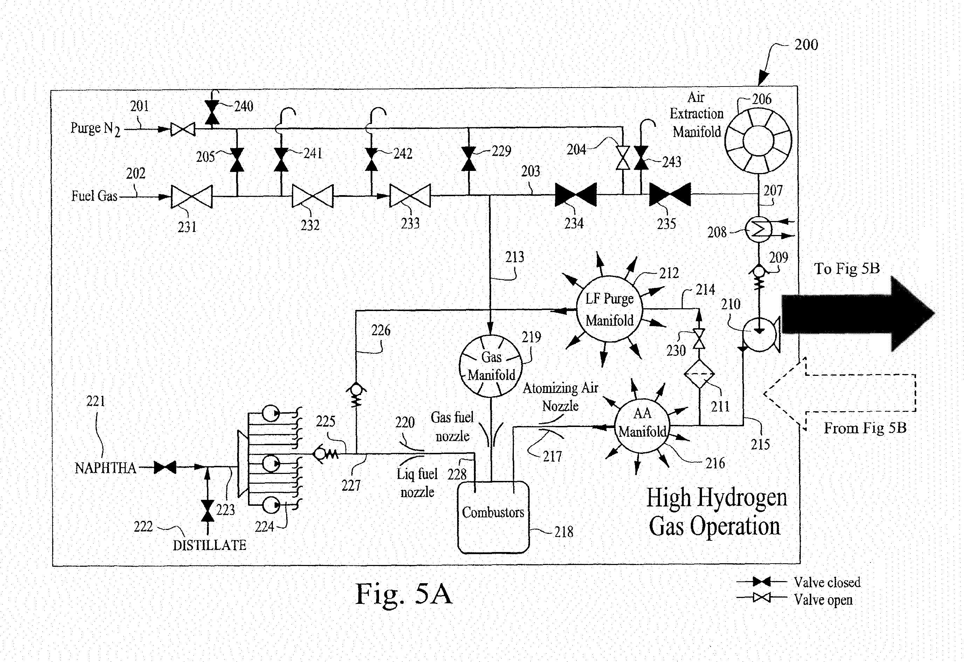

FIGS. 5A through 5C show a simplified process flow diagram of a second aspect of the present invention (identified generally as 200) illustrating the sequence of steps taken to convert the fuel being fed to the combustors from a high hydrogen fuel gas feed first to a combination high hydrogen fuel gas and distillate mix fire operation, and thereafter to a high hydrogen fuel gas and naphtha mixed co-fire feed. For ease of reference, FIGS. 5A though 5C depict the same major process components (including for example the combustor, compressors, control valves, etc.) as depicted in FIGS. 4A through 4D. However, FIGS. 5A though 5C also show the differences in flow pattern necessary to transfer from one mode of operation to the next (with the different stages identified by their respective legends), and then to transfer from the second mode back to the original mode of operation, again without incurring significant disruptions in overall gas turbine operation or efficiency.

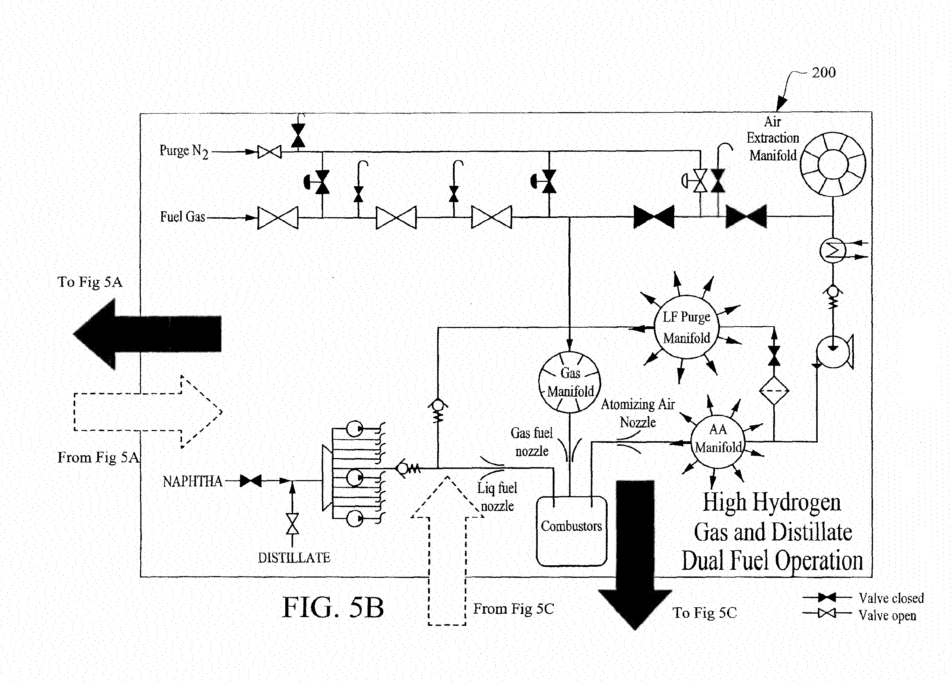

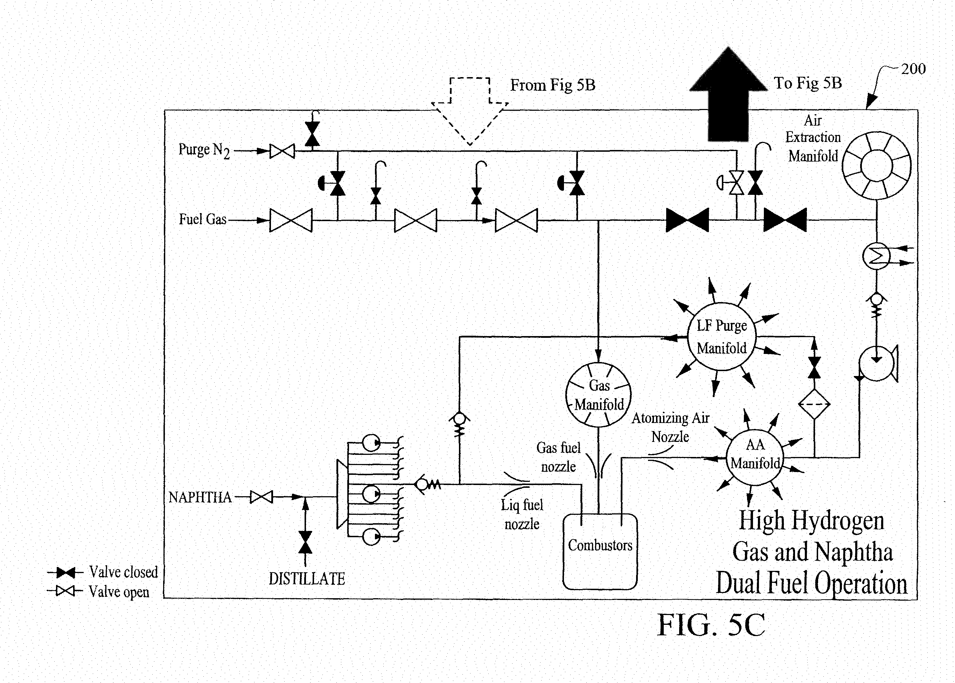

As FIG. 5A indicates, the "High Hydrogen Fuel Gas Operation" requires that the high hydrogen fuel gas feed lines remain open (as shown by the open valves identified above in FIG. 5A), where the hydrogen gas passes directly through the high hydrogen fuel gas manifold into the combustor cans. Once the decision is made to shift the operation from high hydrogen fuel gas only to a "High Hydrogen Fuel Gas and Distillate Dual Fuel Operation" mode (FIG. 5B), the liquid fuel (in this example, using distillate only), together with atomizing air, are fed through their respective manifolds and into the combustors in a manner similar to that described above in connection with the FIG. 5B embodiment. In like manner, the high hydrogen fuel gas/distillate mode can be shifted to a high hydrogen fuel gas and naphtha combination feed as shown and identified as "High Hydrogen Fuel Gas and Naphtha Dual Fuel Operation" (FIG. 5C), again with changes in valve openings and the different flow pattern as indicated in the modified figure. The arrows from one flow pattern to the next also confirm that the mode of operation (for example, using high hydrogen fuel gas and naphtha as the combined fuel feed) can be shifted back to a high hydrogen fuel gas/distillate mode, if desired.

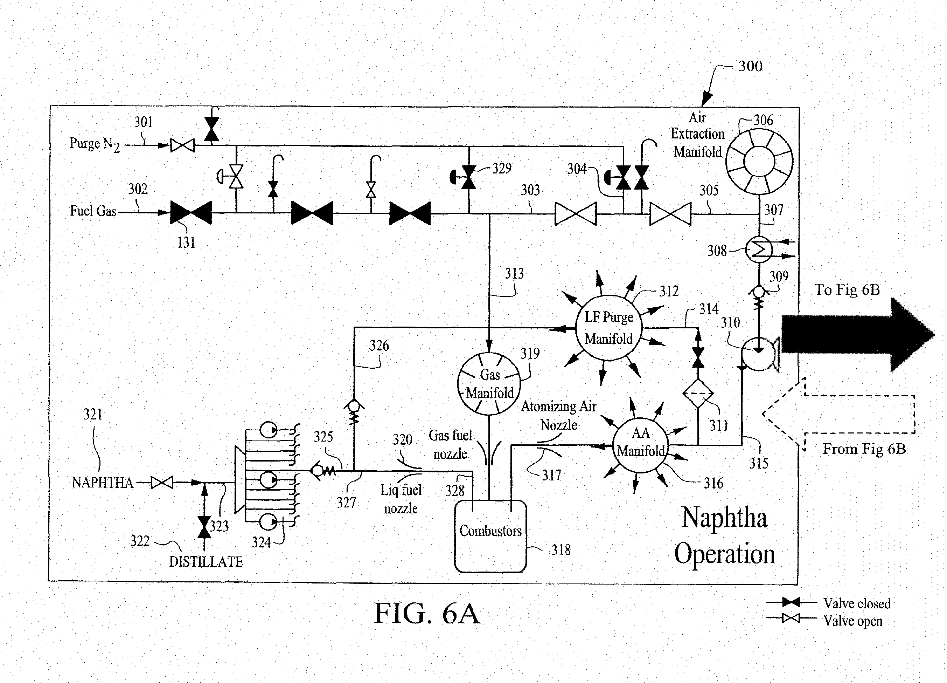

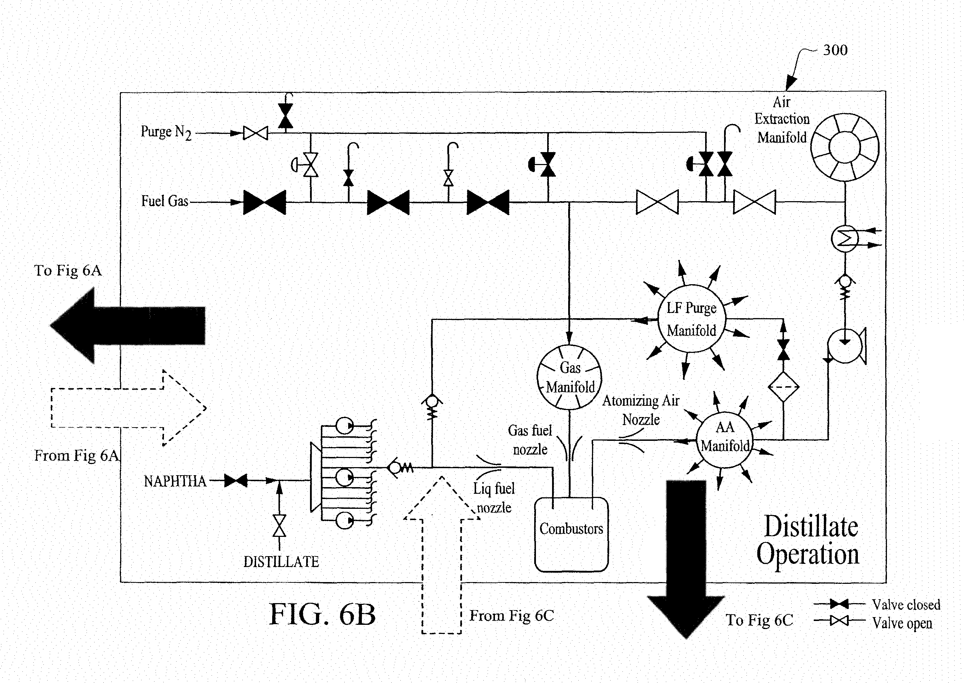

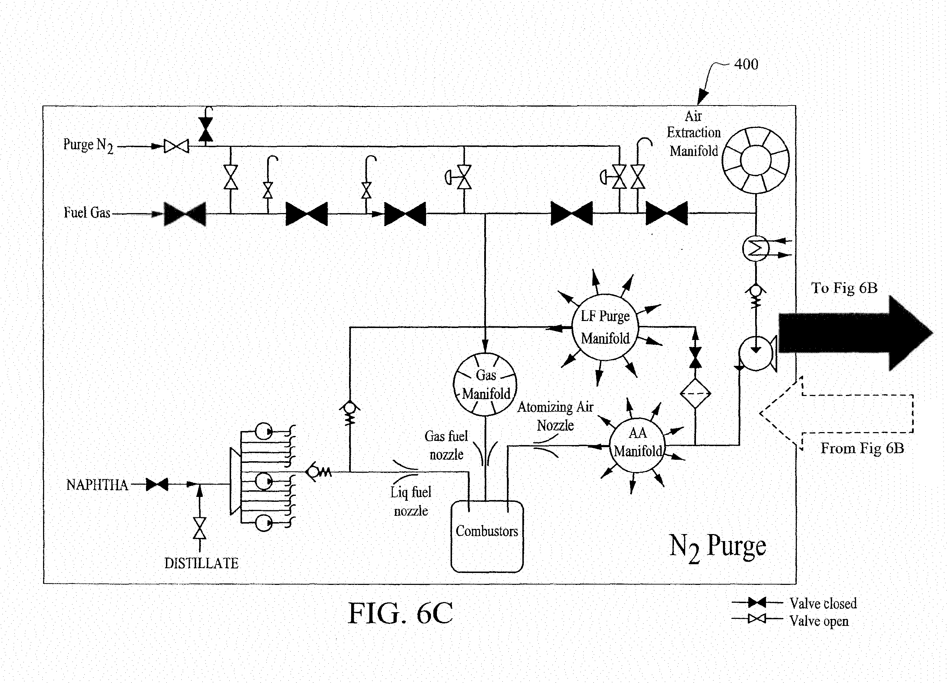

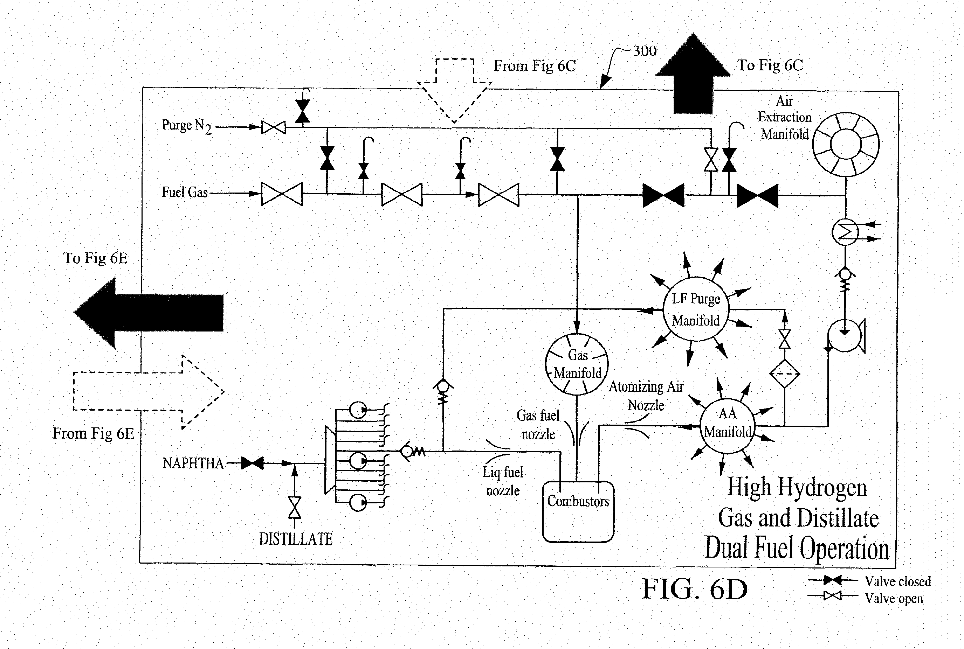

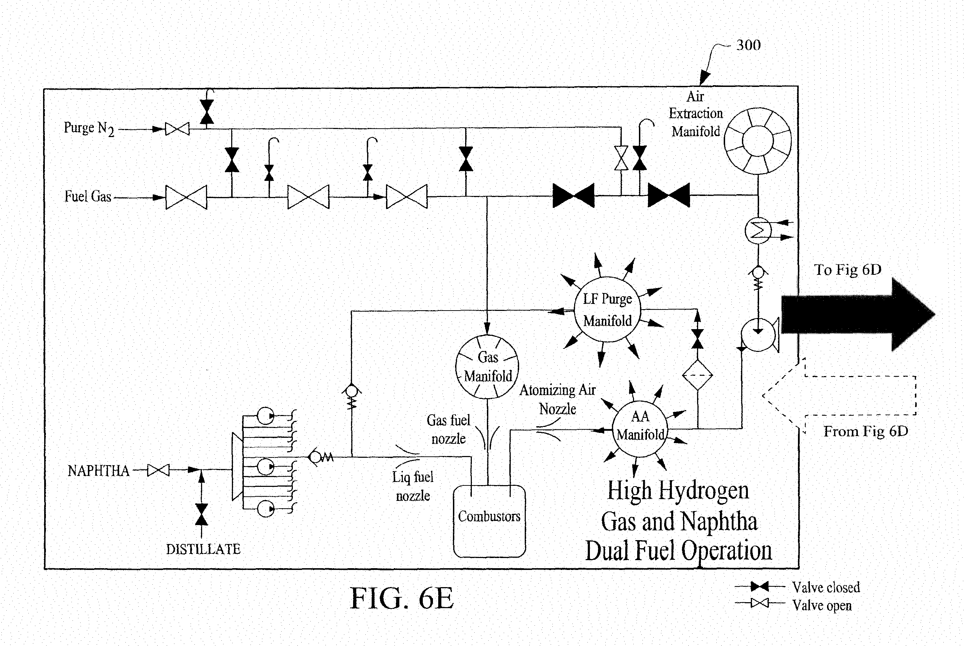

FIGS. 6A through 6E are a series of simplified process flow diagrams of a third aspect of the present invention (identified generally as 300) illustrating the sequence of steps taken to convert the fuel being fed to the combustors from a 100% naphtha feed (the "Naphtha Operation") to a distillate operation (FIG. 6B), followed by a nitrogen purge of the gas fuel system (FIG. 6C) (which uses the same flow pattern as FIG. 4B), and thereafter to a combination of high hydrogen fuel gas and distillate in a co-fire, dual fuel mode (FIG. 6D), and finally to a high hydrogen fuel gas and naphtha mixed co-fire feed (FIG. 6E). As noted above in connection with the embodiments in FIGS. 4 and 5, the same basic process lines and equipment are depicted, but with the different valve and flow patterns (open or closed) as required to make the different transitions from one operating mode to another.

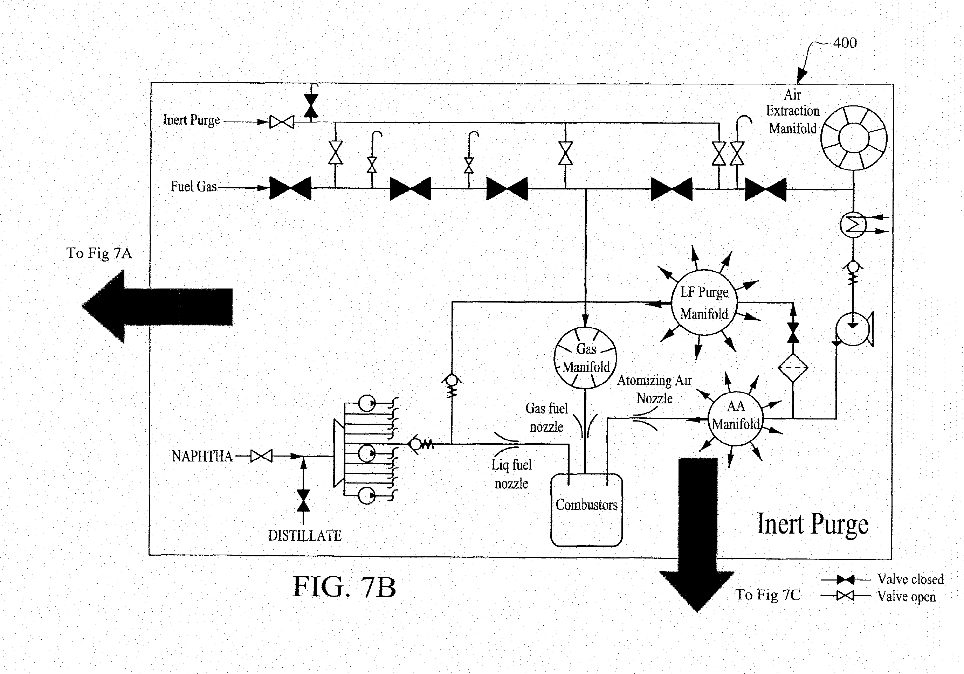

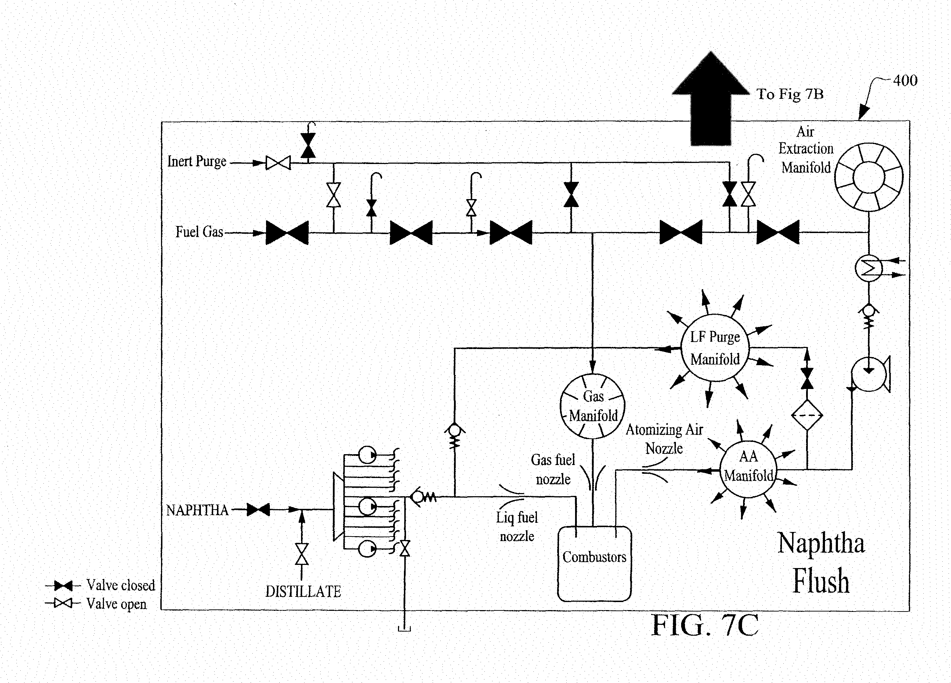

Finally, FIGS. 7A though 7C are a series of simplified process flow diagrams illustrating the sequence of steps taken to purge the high hydrogen gas fuel lines using either nitrogen or an inert purge (FIG. 7B) and then flushing the naphtha lines with distillate (FIG. 7C) after the system has been tripped from a high hydrogen fuel gas and naphtha co-fire dual fuel mode. Again, the difference in valve and process line configurations for the nitrogen and naphtha purges as they are carried out can be seen in the relevant changes in valve openings and closings.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A fuel delivery system for a gas turbine (13), comprising:
a high hydrogen fuel gas module (61) including means for delivering a source of high hydrogen fuel gas (71) to one or more combustors (73) of said gas turbine (13);
a distillate fuel module (122) including means for delivering a first liquid-fuel (82) to said combustors (73);
a naphtha fuel module (121) including means for delivering a second liquid-fuel (83) comprising naphtha to said combustors (73).;
an atomized air delivery system (76) coupled to said combustors (73);
an air extraction system coupled (80) to the discharge of said combustors (73); and
distribution control valves (62,69,70,85,77) for each of said high hydrogen fuel gas, distillate fuel (122) and naphtha fuel (121) modules.

2. A fuel delivery system according to claim 1, further comprising a nitrogen purge system (101).

3. A fuel delivery system according to claim 1 or 2, wherein said high hydrogen fuel gas (71) contains at least 5% by volume hydrogen to a maximum of 100% hydrogen.

4. A fuel delivery system according to any of claims 1 to 3, wherein selected ones of said distribution control valves (62,69,70) restrict and control the high hydrogen fuel gas fed (71) to said combustors (73).

5. A fuel delivery system according to any of claims 1 to 4, wherein selected ones of said distribution control valves (85,77) restrict and control said distillate fuel fed (82) to said combustors (73).

6. A fuel delivery system according to any of claims 1 to 5, wherein selected ones of said distribution control valves (85,77) restrict and control said naphtha fuel fed (83) to said combustors (73).

7. A fuel delivery system according to any of claims 1 to 6, wherein selected ones of said distribution control valves (85) restrict and control said mixture of distillate and naphtha fuel fed (87) to said combustors (73).

8. A fuel delivery system according to any preceding claim, further comprising control valves (85) for transferring from said first liquid fuel (82) to said second liquid fuel (83).

9. A fuel delivery system according to any preceding claim, wherein said atomized air delivery system comprises an atomizer (79) for said liquid fuel feed (75) to said combustors (73).

10. A fuel delivery system according to any preceding claim, further comprising separate fuel manifolds for each of said high hydrogen fuel gas, distillate fuel and naphtha fuel modules.

11. A fuel delivery system according to any of claims 2 to 10, wherein said nitrogen purge module (101) comprises control valves for purging said high hydrogen fuel gas module (61) with nitrogen (63).

12. A method of changing the composition of fuel fed to the combustors (73) of a gas turbine from a gas fuel (71) to a liquid fuel (75), comprising the steps of:
feeding a controlled amount of high hydrogen fuel gas (71) to said combustors (73);
shutting down the flow of said high hydrogen fuel gas (71);
purging the flow lines carrying said high hydrogen fuel gas (71) with nitrogen;
feeding a controlled amount of a liquid fuel (75) to said combustors (73); and
feeding pressurized air (88) to said combustors (73) sufficient to atomize said liquid fuel (75).

13. A method according to claim 12, wherein said liquid fuel (75) comprises one of a distillate (82), naphtha (83) or a mixture of a distillate fuel and naphtha (82,83).

14. A method of transferring the fuel fed to the combustors (73) of a gas turbine from a liquid fuel (82,83) to a gas fuel (71), comprising the steps of:
feeding a controlled amount of a liquid fuel (75) to said combustors (73);
atomizing said liquid fuel prior (75) to combustion in said combustors (73);
purging the lines carrying said high hydrogen fuel gas (71) with nitrogen;
shutting down the flow of said liquid fuel (75);
purging the lines carrying said high volatile liquid fuel (73) with a second low volatile liquid fuel; and
feeding a controlled amount of a high hydrogen fuel gas (71) to said combustors (83).

15. A method according to claim 14 wherein said liquid fuel comprises naphtha, a distillate or a mixture thereof.
